# EUROPÄISCHE PATENTANMELDUNG

(11) **EP 0 921 069 A1**
(43) Veröffentlichungstag der Anmeldung: **09.06.1999**
(21) Anmeldenummer: 97710019.7
(22) Anmeldetag: 06.09.1997
(51) Int. Cl.: B64C 13/04, G05G 1/14, F16C 1/02

(54) **Verstellvorrichtung**

(71) Anmelder: IMO Industries GmbH, 42579 Heiligenhaus (DE)
(72) Erfinder: Lorenzi, Peter, 42327 Wuppertal (DE)
(74) Vertreter: Stenger, Watzke & Ring Patentanwälte

(57) **Zusammenfassung**

Um bei einer Verstellvorrichtung, vorzugsweise für Pedale einer Flugzeugrudersteuerung, mit einer drehbar gelagerten Spindel (2), in die mittels eines Betätigungselementes (6) ein Drehmoment einleitbar ist, welches als Verstellbewegung zu einem Verstellgetriebe übertragbar ist, und einer Spindelmutter (15), die infolge der Drehbewegung der Spindel (2) axial bewegbar ist, und durch die der maximale Verstellweg einstellbar ist, eine schnelle und bequeme Verstellung bei ergonomischer Anordnung des Betätigungselementes in einem Cockpit zu erzielen, ist die Spindel (2) mit einem steilgängigen Gewinde versehen und über eine Rücklaufsperre (25) und eine biegsame Welle (8) mit dem Verstellgetriebe verbunden.

## Beschreibung

Die Erfindung betrifft eine Verstellvorrichtung, vorzugsweise für Pedale einer Flugzeugrudersteuerung, mit einer drehbar gelagerten Spindel, in die mittels eines Betätigungselementes ein Drehmoment einleitbar ist, welches als Verstellbewegung zu einem Verstellgetriebe übertragbar ist, und einer Spindelmutter, die infolge der Drehbewegung der Spindel axial bewegbar ist, und durch die der maximale Verstellweg einstellbar ist.

Die Fluglage eines Flugzeuges wird durch Einleitung von Drehbewegungen um die Längs-, Quer- oder Hochachse verändert. Zur Steuerung dienen dabei ein Steuerknüppel bzw. ein Handrad und Pedale, die eine Veränderung der Anstellung von Quer-, Höhen- oder Seitenruder bewirken, wodurch sich Momente um die entsprechende Schwerpunktachse ergeben. Um eine hinsichtlich der Bewegungsmöglichkeit der menschlichen Fußgelenke günstige Anordnung der Pedale zu erzielen, bei der die Drehachse in der Nähe der Ferse liegt, so daß die Betätigung durch Auf- und Abbewegung der Fußspitze aus dem Sprunggelenk erfolgt, ist es bekannt, die Pedale eines Flugzeuges zu verstellen, um eine optimale Anpassung an den jeweiligen Piloten zu erreichen, da der Sitz eines Flugzeuges in der Regel fest verankert ist.

Zum Verstellen der Pedale wird eine über ein Handrad zu betätigende Spindel verwendet, die direkt an dem Pedal sitzt. Dies ist mit dem Nachteil verbunden, daß der Pilot eine schädliche und unbequeme Bückhaltung einnehmen muß, um das Handrad betätigen zu können. Ein weiterer Nachteil besteht darin, daß die als Stelltrieb dienende Spindel eingängig und mit einer geringen Flankensteigung ausgebildet ist, um die für eine exakte Positionierung erforderliche Selbsthemmung zu erzeugen. Dies ist jedoch aufgrund des langen Verfahrweges der Spindel einer schnellen Verstellung abträglich, so daß vor allem bei größeren Verstellerfordernissen die unbequeme Bückhaltung zu einer unerträglichen Belastung wachsen kann. Ein Nachteil besteht ferner darin, daß es am Ende des Verfahrweges der Spindel bzw. der Spindelmutter zu einem Einklemmen ersterer kommen kann, so daß es notwendig ist, hohe Betätigungskräfte in einer ungünstigen Bückhaltung aufzubringen.

Der Erfindung liegt die **Aufgabe** zugrunde, eine Verstellvorrichtung der eingangs genannten Art dahingehend weiterzubilden, daß sich unter Vermeidung der beschriebenen Nachteile eine schnelle und bequeme Verstellung der Pedale an einem ergonomisch günstigen Platz im Cockpit ergibt.

Die **Lösung** dieser Aufgabe ist erfindungsgemäß dadurch gekennzeichnet, daß die Spindel mit einem steilgängigen Gewinde versehen und über eine Rücklaufsperre und eine biegsame Welle mit dem Verstellgetriebe verbunden ist.

Unter einem steilgängigen Gewinde im vorstehenden Sinne werden alle Gewindearten verstanden, deren Steigungswinkel eine Selbsthemmung hervorrufen. Durch die erfindungsgemäße Ausgestaltung ist eine ergonomisch günstige Anbringung der die Verstellung bewirkenden Spindel im Cockpit möglich, indem die Verstellbewegung über die biegsame Welle weitergeleitet wird. Durch die Verwendung eines steilgängigen Gewindes für die Spindel ist zudem eine schnelle Verstellbewegung gewährleistet. Das kombinative Vorhandensein der Rücklaufsperre bietet den Vorteil, daß ein selbsthemmendes Gewinde für die Spindel nicht mehr erforderlich ist.

Vorteilhafterweise ist das Gewinde der Spindel mehrgängig ausgebildet, so daß sich sehr schnelle Verstellbewegungen erzielen lassen. Von Vorteil ist weiterhin, wenn die Rücklaufsperre an dem der Spindel gegenüberliegenden Ende der biegsamen Welle angeordnet ist und in beiden möglichen Drehrichtungen eine Sperrwirkung aufweist, so daß ein selbsttätiges Rückstellen des Verstellgetriebes auszuschließen ist.

In einer bevorzugten Ausführungsform weist die Rücklaufsperre einen die Drehbewegung übertragenden Wellenkörper und einen konzentrisch dazu angeordneten Ring auf, wobei zumindest in einem Abschnitt der äußeren Mantelfläche des Wellenkörpers zwei gegenläufig orientierte Klemmflächen ausgebildet sind, und wobei zwischen den Klemmflächen und der diesen gegenüberliegenden inneren Mantelfläche des Ringes Klemmkörper geführt sind. Auf diese Weise ist eine reibschlüssige Rücklaufsperre realisiert, die bei Einleitung eines unerwünschten Drehmomentes von Seiten des Verstellgetriebes, das heißt von den Pedalen her, eine Anpreßkraft erzeugt, welche je nach Richtung des Drehmomentes einen der beiden Klemmkörper zwischen innerer Mantelfläche des Ringes und äußerer Mantelfläche des Wellenkörpers verklemmt. Zweckmäßigerweise ändert sich der radiale Abstand zwischen den Klemmflächen an der äußeren Mantelfläche des Wellenkörpers und der inneren Mantelfläche des Ringes zwischen einem Größt- und einem Kleinstmaß, wobei der Durchmesser der Klemmkörper geringer als das Größt- und größer als das Kleinstmaß ist, so daß eine kegelige Klemmfläche gebildet wird, die eine sofortige Mitnahme der Klemmkörper und damit eine zuverlässige Rücklaufsperrung sicherstellen.

Gemäß einem Merkmal der Erfindung sind die Klemmkörper Zylinderrollen, die durch ein Federelement voneinander beabstandet sind, um eine totgangsfreie Sperrung zu gewährleisten. Um eine einfache und kostengünstige Montage zu erzielen, ist gemäß einer weiteren vorteilhaften Ausgestaltung der Erfindung der Wellenkörper aus einem Kupplungsteil zum Anschluß an die biegsame Welle und einem im formschlüssigen Eingriff mit diesem stehenden Verbindungsteil zum Anschluß an das Verstellgetriebe zusammengesetzt. Zweckmäßigerweise sind die Klemmflächen am Verbindungsteil ausgebildet, um eine kostengünstige Fertigung zu erzielen. Zweckmäßig ist ferner, wenn durch den formschlüssigen Eingriff des Kupplungsteils in das Verbindungsteil ein die Bewegung der Klemmkörper begrenzender Aufnahmeraum gebildet ist, so daß zum einen ein einfaches Einsetzen der Klemmkörper bei der Montage gewährleistet ist und zum anderen ein Verspannen des zwischen den Klemmkörpern geführten Federelementes ohne Berührung der inneren Mantelfläche des Ringes möglich ist, so daß sich ein zuverlässiger Freilauf bei Einleitung eines Drehmomentes von Seiten der Spindel ergibt.

Gemäß einem weiteren Merkmal der Erfindung weist die Rücklaufsperre ein zweiteiliges Gehäuse auf, das mit Lagerbuchsen für das Kupplungs- und Verbindungsteil versehen ist, um eine einfache Montage und eine reibungsarme Drehmomentübertragung zu gewährleisten. Von Vorteil ist ferner, wenn der Verfahrweg der Spindelmutter durch beidseitige Anschläge begrenzt ist, so daß ein Verklemmen der Spindel vermieden wird. Schließlich wird vorgeschlagen, daß das Betätigungselement eine Handkurbel ist, um eine schnelle und ermüdungsarme Drehmomenteinleitung zu erzielen.

Weitere Merkmale und Vorteile des Gegenstandes der Erfindung ergeben sich aus der nachfolgenden Beschreibung eines bevorzugten Ausführungsbeispieles, das in den Zeichnungen dargestellt ist, und zwar zeigen:
- Fig. 1: eine in einem Spindelgehäuse drehbar gelagerte Spindel mit Kurbelantrieb und einer angeschraubten biegsamen Welle in einer Seitenansicht;
- Fig. 1a: das Spindelgehäuse gemäß Fig. 1 in einer Vorderansicht;
- Fig. 1b: das Spindelgehäuse gemäß Fig. 1 in einer Ansicht von unten;
- Fig. 1c: das Spindelgehäuse mit drehbar gelagerter Spindel in einem Längsschnitt;
- Fig. 2: eine biegsame Welle in einer teilgeschnittenen Darstellung;
- Fig. 3: eine Rücklaufsperre in einer teilgeschnittenen Darstellung;
- Fig. 3a: die Rücklaufsperre gemäß Fig. 3 in einem Längsschnitt und
- Fig. 3b: die Rücklaufsperre gemäß Fig. 3 in einer teilgeschnittenen Vorderansicht.

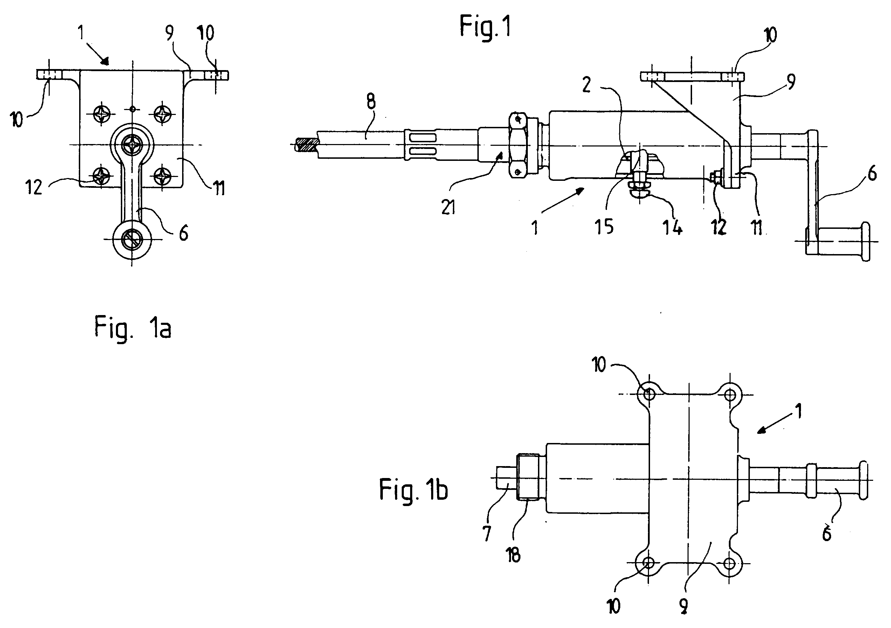

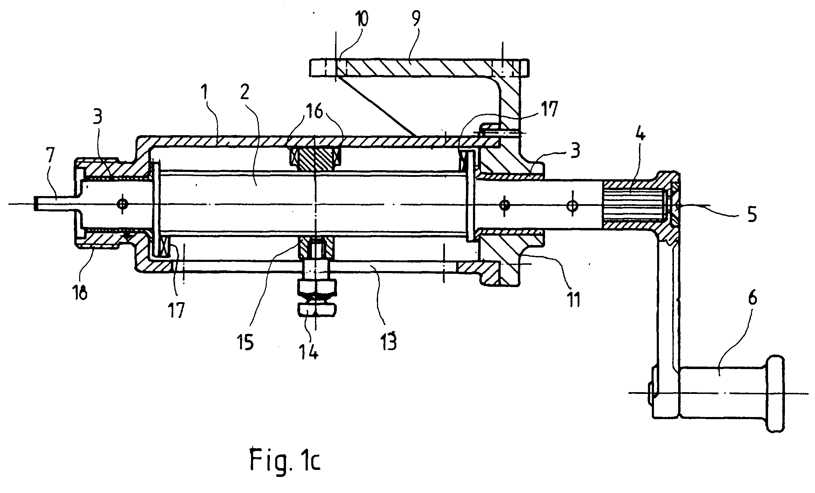

In dem in den Fig. 1 bis 1c dargestellten Spindelgehäuse 1 ist drehbar eine Spindel 2 in Lagerbuchsen 3 gelagert. Das eine Ende der Spindel 2 ist über einen Keilwellenabschnitt 4 und eine Schraubverbindung 5 formschlüssig mit einer Kurbel 6 verbunden, während das andere Ende der Spindel 2 mit einer blattförmigen Drehmitnahme 7 versehen ist, die ein formschlüssiges Ankuppeln an eine biegsame Welle 8 ermöglicht. Das Spindelgehäuse 1 weist einen Befestigunsflansch 9 auf, dessen abgerundet ausgestaltete Ecken mit Durchgangsbohrungen 10 für Befestigungsschrauben versehen sind. Der Befestigungsflansch 9 ist einstückig mit einem Deckel 11 gefertigt, der über eine Schraubverbindung 12 das Spindelgehäuse 1 am kurbelseitigen Ende verschließt.

Auf der dem Befestigungsflansch 9 gegenüberliegenden Seite ist das Spindelgehäuse 1 mit einer schlitzartigen Öffnung 13 versehen, die von einer Schraube 14 durchragt wird, welche in eine Spindelmutter 15 eingeschraubt ist. Die Spindelmutter 15 ist beidseitig mit nasenförmigen Vorsprüngen 16 versehen, welche bei axialer Bewegung der Spindelmutter 15 infolge einer Drehung der Spindel 2 gegen Anschläge 17 am Ende der Verfahrbewegung der Spindelmutter 15 stoßen. Auf diese Weise wird ein Verklemmen der Spindel 2 vermieden.

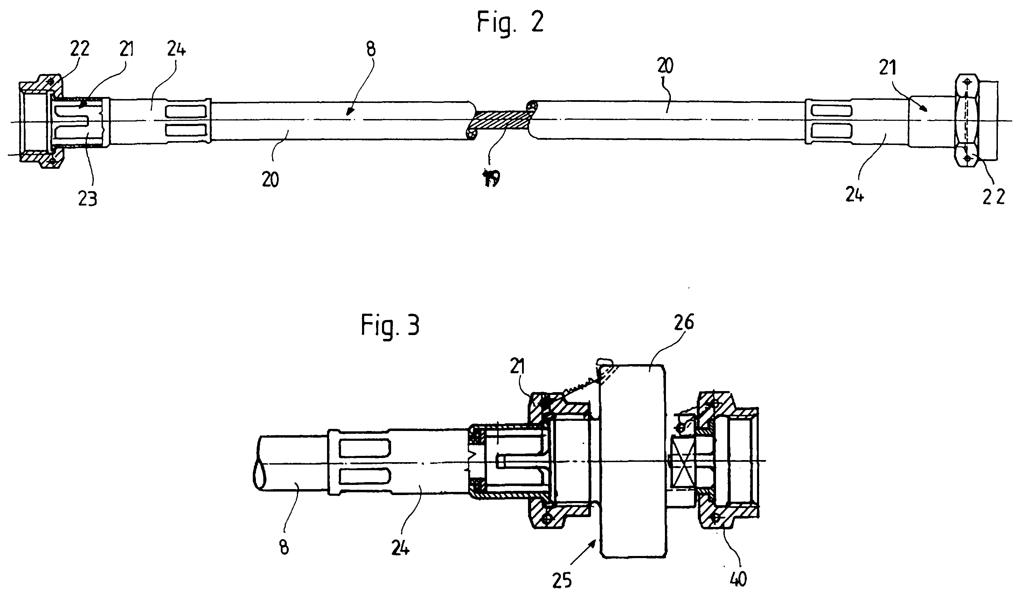

Das Spindelgehäuse 1 ist an der Seite der blattförmigen Drehmitnahme 7 mit einem Außengewinde 18 versehen, über das die biegsame Welle 8 anschließbar ist. Wie aus Fig. 2 zu entnehmen ist, weist die biegsame Welle 8 einen vieldrähtigen Mittelstrang 19 aus Stahl auf, der mit einem widerstandsfähigen Schutzüberzug 20 aus Kunststoff überzogen ist. Die Enden der biegsamen Welle 8 sind jeweils mit einem Anschlußstück 21 versehen, das eine drehbare Überwurfmutter 22 und ein schlitzförmiges Kupplungselement 23 zur formschlüssigen Aufnahme der blattförmigen Drehmitnahme 7 umfaßt. Um eine zuverlässige Drehbeweglichkeit der Überwurfmuttern 22 sicherzustellen, ist der Schutzüberzug 20 im Bereich der Enden der biegsamen Welle 8 mit einer aufgepreßten Metallhülse 24 versehen, deren stirnseitiges Ende zu einer Anschlagfläche für die Überwurfmutter 22 ausgebildet ist.

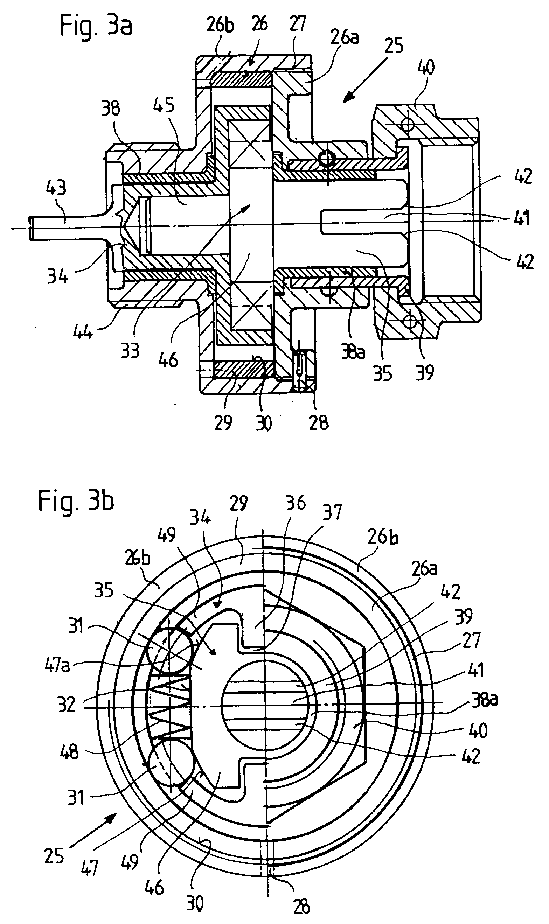

Das der Spindel 2 abgewandte Ende der biegsamen Welle 8 ist über das Anschlußstück 21 an eine Rücklaufsperre 25 angeschlossen. Wie in den Fig. 3 bis 3b zu erkennen ist, weist die Rücklaufsperre 25 ein zweiteiliges Gehäuse 26 auf, das aus den über ein Gewinde 27 und eine Stiftverbindung 28 miteinander verbundenen Gehäuseteilen 26a und 26b zusammengesetzt ist. Im Inneren des Gehäuseteils 26b ist mit Preßpassungssitz ein Metallring 29 eingesetzt, dessen innere Mantelfläche 30 eine Gleitfläche für Zylinderrollen 31 bildet. Die Zylinderrollen 31 werden dabei zwischen der inneren Mantelfläche 30 des Metallringes 29 und der äußeren Mantelfläche 32 eines konzentrisch zu dem Metallring 29 angeordneten Wellenkörpers 33 geführt.

Der Wellenkörper 33 setzt sich aus einem Kupplungsteil 34 und einem Verbindungsteil 35 zusammen, welche im formschlüssigen Eingriff miteinander stehen. Der Formschluß wird über einen radialen Vorsprung 36 und eine dazu korrespondierend ausgestaltete Öffnung 37 hergestellt. Das Kupplungsteil 34 und das Verbindungsteil 35 sind in aus Kunststoff gefertigten Lagerbuchsen 38, 38a drehbar gelagert, welche klemmend in die Gehäuseteile 26a, 26b eingesetzt sind. Zwischen Gehäuseteil 26a und Lagerbuchse 38a ist weiterhin eine metallene Bundbuchse 39 angeordnet, welche die Drehbeweglichkeit einer Überwurfmutter 40 zum Anschluß der Rücklaufsperre 25 an ein Verstellgetriebe sicherstellt. Bei dem nicht dargestellten Verstellgetriebe kann es sich beispielsweise um ein Schraubgetriebe handeln, das die über die Kurbel 6 eingeleitete und über die Spindel 2, die biegsame Welle 8 und die Rücklaufsperre 25 übertragene Drehbewegung in eine axiale Verstellbewegung für die Pedale im Flugzeugcockpit umwandelt. Zur weiteren Übertragung der Drehbewegung ist das Verbindungsteil 35 an seinem stirnseitigen Ende mit einem einen Formschluß herstellenden Schlitz 41 versehen, dessen Innenkanten zum einfachen Einführen einer entsprechend geformten blattförmigen Drehmitnahme eine Fase 42 aufweisen.

Eine blattförmige Drehmitnahme 43 ist an dem dem Verbindungsteil 35 gegenüberliegenden Ende des Kupplungsteils 34 ausgebildet. Zusammen mit einem Außengewinde 44 am Gehäuse 26b läßt sich damit das Anschlußstück 21 der biegsamen Welle 8 anschließen. In das als Hohlwelle ausgebildete Kupplungsteil 34 ragt ein Zylinderabschnitt 45, welcher mit einer stirnseitigen Sacklochbohrung versehen ist. Die Sacklochbohrung dient zur Aufnahme überschüssiger Schmiermittel und erleichtert durch eine infolge eines sich ausbildenden Unterdrucks entstehende Haftung des Verbindungsteils 35 am Kupplungsteil 34 die Montage der Rücklaufsperre 25. Das Verbindungsteil 35 weist einen Absatz 46 auf, dessen eine Stirnfläche an dem Kupplungsteil 34 und die andere Stirnfläche an der Innenfläche der Lagerbuchse 38a bzw. des Gehäuseteils 26a anliegt. Die Umfangsfläche des Absatzes 46 ist in zwei gegenüberliegenden Abschnitten mit der Öffnung 37 versehen, während zwei weitere, kreuzweise dazu angeordnete Abschnitte mit Klemmflächen 47, 47a ausgebildet sind.

Zwischen den Klemmflächen 47, 47a und der inneren Mantelfläche 30 des Metallringes 29 sind die Zylinderrollen 31 geführt, die über ein Federelement 48 voneinander beabstandet und jeweils gegen Vorsprünge 49 gepreßt werden, welche am Kupplungsteil 34 ausgebildet sind. Die Klemmflächen 47, 47a und die innere Mantelfläche 30 des Metallringes 29 bilden einen in Umfangsrichtung sich verjüngenden Spalt, in den je nach Drehrichtung einer der beiden Wälzkörper bei Einleitung eines Drehmomentes über das Verbindungsteil 35 hineingezogen wird, so daß aufgrund des dadurch bedingten Reibschlusses eine Sperrwirkung der Rücklaufsperre 25 erzielt wird. Die Einleitung von Drehmomenten über das Kupplungsteil 34 hat hingegen einen Freilauf in beiden möglichen Drehrichtungen zur Folge, da durch die Vorsprünge 49 die Zylinderrollen 31 an einer Position gehalten werden, die noch ein leichtes Spiel zwischen innerer Mantelfläche 30 des Metallringes 29 und Klemmflächen 47, 47a aufweisen. Eine reibschlüssige Mitnahme der Zylinderrollen 31 kann somit nicht stattfinden. Voraussetzung für die Funktionsfähigkeit der Rücklaufsperre 25 ist daher, daß das Kupplungsteil 34 und das Verbindungsteil 35 sich in geringem Maße relativ zueinander verdrehen lassen, so daß die Zylinderrollen 31 in den zwischen Klemmflächen 47, 47a und innerer Mantelfläche 30 ausgebildeten Spalt hineingezogen werden. Daher ist auch der formschlüssige Eingriff des radialen Vorsprunges 36 in die Öffnung 37 mit einem geringen Spiel ausgestattet. Um den Sicherheitsanforderungen im Flugzeugbau Rechnung zu tragen, sind alle drehbeweglichen Anschlußteile, wie beispielsweise die Anschlußstücke 21 der biegsamen Welle 8 oder die beiden Gehäuseteile 26a und 26b, über verplombbare Stift- oder Drahtverbindungen gegen widerrechtliches Öffnen gesichert.

Wird über die Kurbel ein Drehmoment in die Spindel 2 eingeleitet, so wird dieses über die biegsame Welle 8 und die Rücklaufsperre 25 in das Verstellgetriebe übertragen, welche eine Lageverstellung der Pedale einer Flugzeugrudersteuerung bewirkt. Das nicht dargestellte Verstellgetriebe kann, wie bereits erwähnt, beispielsweise ein Schraubgetriebe oder ein sonstiges Getriebe sein, das die Drehbewegung in einer Verstellbewegung umwandelt. Die in der Spindelmutter 15 fixierte und in der Öffnung 13 axial geführte Schraube 14 verursacht eine axiale Längsbewegung der Spindelmutter 15 bei Drehung der Spindel 2. Durch den maximalen Verfahrweg der Spindelmutter 15 zwischen den Anschlägen 17 wird der Verstellweg der Verstellvorrichtung vorgegeben. Das von der Kurbel 6 erzeugte Drehmoment wird sowohl bei Links- als auch bei Rechtsdrehung über die Rücklaufsperre 25 übertragen, indem die Zylinderrollen 31 eine Mitnahme über die Vorsprünge 49 bewirken. Wird hingegen ein Drehmoment von Seiten des Verstellgetriebes her in die Rücklaufsperre 25 eingeleitet, so tritt bei Links- und Rechtsdrehung eine Sperrwirkung durch reibschlüssiges Einklemmen der Zylinderrollen 31 auf.

Eine solchermaßen ausgestaltete Verstellvorrichtung gestattet eine bequeme und schnelle Verstellmöglichkeit der Pedale einer Flugzeugrudersteuerung. Das Spindelgehäuse 1 kann über den Befestigungsflansch 9 an einer ergonomisch günstigen Stelle im Cockpit angeordnet werden, so daß zum Verstellen der Pedale keine schädliche Bückhaltung mehr einzunehmen ist. Aufgrund der Rücklaufsperre 25 ist es möglich, daß Gewinde der Spindel 2 steil- und/oder mehrgängig auszubilden, um einen schnellen Vorschub bzw. schnelle Verstellung zu erzielen. Durch den modularen Aufbau aus Spindel 2, biegsamer Welle 8, Rücklaufsperre 25 und einem den jeweiligen Gegebenheiten entsprechenden Verstellgetriebe ist die Verwendung der Verstellvorrichtung nicht nur auf Pedale einer Flugzeugrudersteuerung beschränkt, sondern läßt sich in allen Bereichen, die eine fernbetätigte Verstellung erfordern, verwenden.

### Bezugszeichenliste

- 1: Spindelgehäuse
- 2: Spindel
- 3: Lagerbuchse
- 4: Keilwellenabschnitt
- 5: Schraubverbindung
- 6: Kurbel
- 7: blattförmige Drehmitnahme
- 8: biegsame Welle
- 9: Befestigungsflansch
- 10: Durchgangsbohrung
- 11: Deckel
- 12: Schraubverbindung
- 13: schlitzartige Öffnung
- 14: Schraube
- 15: Spindelmutter
- 16: nasenförmiger Vorsprung
- 17: Anschläge
- 18: Außengewinde
- 19: Mittelstrang
- 20: Schutzüberzug
- 21: Anschlußstück
- 22: Überwurfmutter
- 23: Kupplungselement
- 24: Metallhülse
- 25: Rücklaufsperre
- 26: Gehäuse
- 26a: Gehäuseteil
- 26b: Gehäuseteil
- 27: Gewinde
- 28: Stiftverbindung
- 29: Metallring
- 30: Mantelfläche
- 31: Zylinderrollen
- 32: Mantelfläche
- 33: Wellenkörper
- 34: Kupplungsteil
- 35: Verbindungsteil
- 36: radialer Vorsprung
- 37: Öffnung
- 38: Lagerbuchse
- 38a: Lagerbuchse
- 39: Bundbuchse
- 40: Überwurfmutter
- 41: Schlitz
- 42: Fase
- 43: blattförmige Drehmitnahme
- 44: Außengewinde
- 45: Zylinderabschnitt
- 46: Absatz
- 47: Klemmfläche
- 47a: Klemmfläche
- 48: Federelement
- 49: Vorsprung

## Patentansprüche

1. Verstellvorrichtung, vorzugsweise für Pedale einer Flugzeugrudersteuerung, mit einer drehbar gelagerten Spindel (2), in die mittels eines Betätigungselementes (6) ein Drehmoment einleitbar ist, welches als Verstellbewegung zu einem Verstellgetriebe übertragbar ist, und einer Spindelmutter (15), die infolge der Drehbewegung der Spindel (2) axial bewegbar ist, und durch die der maximale Verstellweg einstellbar ist,
**dadurch gekennzeichnet,**
daß die Spindel (2) mit einem steilgängigen Gewinde versehen und über eine Rücklaufsperre (25) und eine biegsame Welle (8) mit der Verstelleinrichtung verbunden ist.

2. Verstellvorrichtung nach Anspruch 1, dadurch gekennzeichnet, daß das Gewinde der Spindel (2) mehrgängig ausgebildet ist.

3. Verstellvorrichtung nach Anspruch 1 oder 2, dadurch gekennzeichnet, daß die Rücklaufsperre (25) an dem der Spindel (2) gegenüberliegenden Ende der biegsamen Welle (8) angeordnet ist und in beiden möglichen Drehrichtungen eine Sperrwirkung aufweist.

4. Verstellvorrichtung nach einem der Ansprüche 1 bis 3, dadurch gekennzeichnet, daß die Rücklaufsperre (25) einen die Drehbewegung übertragenden Wellenkörper (33) und einen konzentrisch dazu angeordneten Ring (29) aufweist, wobei zumindest in einem Abschnitt der äußeren Mantelfläche (32) des Wellenkörpers (33) zwei gegenläufig orientierte Klemmflächen (47, 47a) ausgebildet sind, und wobei zwischen den Klemmflächen (47, 47a) und der diesen gegenüberliegenden inneren Mantelfläche (30) des Ringes (29) Klemmkörper (31) geführt sind.

5. Verstellvorrichtung nach Anspruch 4, dadurch gekennzeichnet, daß sich der radiale Abstand zwischen den Klemmflächen (47, 47a) an der äußeren Mantelfläche (32) des Wellenkörpers (33) und der inneren Mantelfläche (30) des Ringes (29) zwischen einem Größt- und einem Kleinstmaß ändert, wobei der Durchmesser der Klemmkörper (31) geringer als das Größt- und größer als das Kleinstmaß ist.

6. Verstellvorrichtung nach Anspruch 4 oder 5, dadurch gekennzeichnet, daß die Klemmkörper (31) Zylinderrollen sind, die durch ein Federelement (48) voneinander beabstandet sind.

7. Verstellvorrichtung nach einem der Ansprüche 4 bis 6, dadurch gekennzeichnet, daß der Wellenkörper (33) aus einem Kupplungsteil (34) zum Anschluß an die biegsame Welle (8) und einem im formschlüssigen Eingriff mit diesem stehenden Verbindungsteil (35) zum Anschluß an die Verstelleinrichtung zusammengesetzt ist.

8. Verstellvorrichtung nach Anspruch 7, dadurch gekennzeichnet, daß die Klemmflächen (47, 47a) am Verbindungsteil (35) ausgebildet sind.

9. Verstellvorrichtung nach Anspruch 8, dadurch gekennzeichnet, daß durch den formschlüssigen Eingriff des Kupplungsteils (34) in das Verbindungsteil (35) ein die Bewegung der Klemmkörper (31) begrenzender Aufnahmeraum gebildet ist.

10. Verstellvorrichtung nach einem der Ansprüche 6 bis 9, dadurch gekennzeichnet, daß die Rücklaufsperre (25) ein zweiteiliges Gehäuse (26a, 26b) aufweist, das mit Lagerbuchsen (38, 38a) für das Kupplungs- und Verbindungsteil (34, 35) versehen ist.

11. Verstellvorrichtung nach einem der Ansprüche 6 bis 10, dadurch gekennzeichnet, daß der Verfahrweg der Spindelmutter (15) durch beidseitige Anschläge (17) begrenzt ist.

12. Verstellvorrichtung nach einem der vorhergehenden Ansprüche, dadurch gekennzeichnet, daß das Betätigungselement (6) eine Handkurbel ist.
